# EUROPÄISCHE PATENTSCHRIFT

(11) **EP 4 411 492 B1**
(45) Veröffentlichungstag und Bekanntmachung des Hinweises auf die Patenterteilung: **18.11.2026**
(21) Anmeldenummer: 23154858.7
(22) Anmeldetag: 03.02.2023
(51) Int. Cl.: G05B 13/04, G05B 19/418

(54) **VERFAHREN ZUR VERMEIDUNG VON OBERFLÄCHENDEFEKTEN BEI DER HERSTELLUNG VON PRODUKTEN IN EINER STRANGGUSSANLAGE**
METHOD OF AVOIDING SURFACE DEFECTS WHEN MANUFACTURING PRODUCTS IN CONTINUOUS CASTING
PROCÉDÉ DE ÉVITER DES DÉFAUTS SUPERFICIELS DANS LA FABRICATION DE PRODUITS DANS UNE COULÉE CONTINUE

(43) Veröffentlichungstag der Anmeldung: 07.08.2024
(73) Patentinhaber: SMS group GmbH, 41069 Mönchengladbach (DE)
(72) Erfinder: Hänisch, Phillip Oliver, 29690 Gilten (DE); Christ, Maximilian, 40225 Düsseldorf (DE); Kirmse, Christoph, 40625 Düsseldorf (DE)
(74) Vertreter: Hemmerich & Kollegen

(56) Entgegenhaltungen:
- EP-A1- 3 488 948
- DE-A1- 102020 206 114
- DE-A1- 102020 210 967
- "Optimale Oberflaechenqualitaet bei hochwertigen Stahlgueten", 1 August 2020 (2020-08-01), pages 39 - 43, XP009544918, ISSN: 0340-4803, Retrieved from the Internet <URL:https://www.yumpu.com/de/document/read/63830092/stahl-eisen-08-2020-leseprobe> [retrieved on 20230621]
- MURTHY RASHMI: "The Cracks Preventer", SMS GROUP - INSIGHTS - ALL INSIGHTS - THE CRACKS PREVENTER, 15 March 2021 (2021-03-15), pages 1 - 6, XP093056711, Retrieved from the Internet <URL:https://www.sms-group.com/insights/all-insights/the-cracks-preventer> [retrieved on 20230622]
- ANONYMOUS: "Cracks Preventer - Product Fact Sheet", 21 June 2023 (2023-06-21), pages 1 - 2, XP093056714, Retrieved from the Internet <URL:https://live.cdn.sms-group-connects.com/fileadmin/SMS_digital_Website/10_Solutions/40_Products/Cracks_Preventer.pdf> [retrieved on 20230622]
- HUEBNER N ET AL: "NEW APPLICATIONS AND BENEFITS OF CAQC IN CASTING", STEEL TIMES, FUEL & METALLURGICAL JOURNALS LTD. LONDON, GB, vol. 225, no. 10, 1 October 1997 (1997-10-01), XP000704301, ISSN: 0039-095X

## Beschreibung

Die Erfindung betrifft ein Verfahren zur Vermeidung von Oberflächendefekten bei der Herstellung von Produkten wie Dickbrammen, Dünnbrammen oder Langprodukten in einer Stranggussanlage umfassend wenigstens die Anlagenteile Stahlwerk, Pfannenofen, Gießmaschine, Walzwerk und Oberflächeninspektion.

Die Herstellung der genannten Produkte in der Stranggussanlage erfolgt in den aufeinanderfolgenden Anlagenteilen Stahlwerk, Pfannenofen, Gießmaschine und Walzwerk. Ferner können noch zusätzliche Anlagenteile in dieser Prozesskette enthalten sein, wie beispielsweise Beizanlagen oder dergleichen. Die Herstellung der Produkte erfolgt also sequenziell in unterschiedlichen Anlagenteilen, welche zwar aufeinanderfolgen, aber nicht zwangsläufig räumlich zusammengefasst sind. Auch kann zwischen den einzelnen Bearbeitungsschritten in den Anlagenteilen eine Verzögerung auftreten.

Die hergestellten Produkte können zu unterschiedlichen Endprodukten weiterverarbeitet werden, wobei die unterschiedlichen Endprodukte bestimmte Anforderungen an die Qualität der hergestellten Produkte aufweisen, wobei die Qualität üblicherweise durch die Art und Anzahl von Oberflächendefekten definiert ist. So müssen beispielsweise die hergestellten Produkte zur Verwendung als Automobilaußenhaut eine wesentlich höhere Qualität aufweisen als beispielsweise bei einer Verwendung als Röhrengut oder Baustahl.

Bei der Herstellung der Produkte wird wenigstens am Ende der genannten Prozesskette die Qualität im Rahmen einer Oberflächeninspektion ermittelt. Diese Oberflächeninspektion kann automatisch oder manuell erfolgen. Die Oberflächeninspektion stellt Defekte wie Risse, insbesondere Längsrisse, oder Schalen und deren Position an der Oberfläche der hergestellten Produkte fest. Die so festgestellten Oberflächendefekte sind maßgeblich dafür, ob die hergestellten Produkte zur Weiterverarbeitung zum jeweils gewünschten Endprodukt geeignet sind oder nicht. Gegebenenfalls können die hergestellten Produkte abgewertet werden und zu Produkten mit geringeren Qualitätsanforderungen weiterverarbeitet werden. Im schlimmsten Fall handelt es sich dabei jedoch um Ausschuss.

Die Herstellung erfolgt in unterschiedlichen Anlagenteilen, insbesondere den Anlagenteilen Stahlwerk, Pfannenofen, Gießmaschine und Walzwerk. Üblicherweise erfolgt eine Prozessoptimierung lediglich innerhalb eines Anlagenteils, nicht jedoch über die gesamte Prozesskette. Dies liegt unter anderem daran, dass die einzelnen Prozessschritte meistens räumlich und/oder zeitlich getrennt voneinander stattfinden. Andererseits haben Defekte eines vorherigen Anlagenteils üblicherweise einen Einfluss auf die nachfolgenden Anlagenteile und die erzielbare Produktqualität. Dabei ist auch zu beachten, dass Oberflächendefekte erst in einem späteren Anlagenteil sichtbar werden können, obwohl deren Ursprung in einem vorgelagerten Anlagenteil liegt.

Um diese Nachteile zu vermeiden, wird in dem Artikel "Optimale Oberflächenqualität bei hochwertigen Stahlgüten", veröffentlicht in der Stahl und Eisen, August 2020, Seiten 39 bis 43, vorgeschlagen, die relevanten Prozessparameter auf der Level-1 und Level-2 Prozessautomation über die gesamte Produktionskette zu erfassen und mit den erfassten Oberflächendefekten und deren Position mittels einer künstlichen Intelligenz und des maschinellen Lernens auszuwerten. Es wird also versucht, die erfassten Prozessparameter mit den erfassten Oberflächendefekten zu korrelieren, um ursächliche Prozessparameter zu identifizieren und nachfolgend zu vermeiden. Der genannte Artikel offenbart jedoch nicht, wie die künstliche Intelligenz und das maschinelle Lernen die ursächlichen Prozessparameter identifiziert, insbesondere wie aus der Vielzahl der erfassten Prozessparameter ein für den erfassten Oberflächendefekt ursächlicher Prozessparameter benannt werden kann.

Der Artikel Murthy Rashmi: "The Cracks Preventer", SMS group - Insights - All Insights - The Cracks preventer, 15. März 2021 (2021-03-15), Seiten 1-6, XP093056711, befasst sich ebenfallsmit der Vermeidung von Oberflächendefekten bei der Herstellung von Produkten wie Dickbrammen, Dünnbrammen oder Langprodukten in einer Stranggussanlage.

Die DE 10 2020 210967 A1 offenbart ein Verfahren zur Überwachung von Produktqualitäten von gewalzten oder geschmiedeten Metallerzeugnissen.

Ausgehend von diesem Stand der Technik liegt der Erfindung die Aufgabe zugrunde, die bei der Herstellung von Produkten wie Dickbrammen, Dünnbrammen oder Langprodukten in einer Stranggussanlage umfassend wenigstens die Anlagenteile Stahlwerk, Pfannenofen, Gießmaschine, Walzwerk und Oberflächeninspektion auftretenden Oberflächendefekte zu minimieren.

Die Aufgabe wird erfindungsgemäß gelöst durch ein Verfahren gemäß Anspruch 1. Vorteilhafte Ausgestaltungen des Verfahrens sind in den abhängigen Ansprüchen enthalten.

Die Erfindung betrifft ein Verfahren zur Vermeidung von Oberflächendefekten bei der Herstellung von Produkten wie Dickbrammen, Dünnbrammen oder Langprodukten in einer Stranggussanlage umfassend wenigstens die Anlagenteile Stahlwerk, Pfannenofen, Gießmaschine, Walzwerk und Oberflächeninspektion, umfassend die Schritte:
- Erfassen von relevanten Regelgrößen in den Anlagenteilen Stahlwerk, Pfannenofen, Gießmaschine und Walzwerk wobei die relevanten Regelgrößen zumindest die Zusammensetzung der Legierung, die Temperatur im Pfannenofen, die Gießgeschwindigkeiten der Gießmaschine und Parameter im Walzwerk umfassen;
- Zuordnen der erfassten Regelgrößen zu entsprechenden Positionen des hergestellten Produkts;
- Erfassen von Oberflächendefekten und deren Position am hergestellten Produkt durch die Oberflächeninspektion;
- Vorhersage von wahrscheinlichen zukünftigen Oberflächendefekten mittels wenigstens eines Vorhersagemodells auf Basis der erfassten relevanten Regelgrößen, der den Regelgrößen zugeordneten Positionen am hergestellten Produkt und der erfassten Oberflächendefekte und deren Position am hergestellten Produkt, wobei das wenigstens eine Vorhersagemodell auf einer künstlichen Intelligenz basiert;
- Auswerten der Vorhersage des Vorhersagemodells mittels eines Auswertemodells zur Bestimmung einer Fehlerursache des vom Vorhersagemodell vorhergesagten Oberflächendefekts, wobei das Auswertemodell die wahrscheinlichste Fehlerursache für den vorhergesagten Oberflächendefekt und eine einzige, wahrscheinlichste Regelgröße der Anlagenteile Stahlwerk, Pfannenofen, Gießmaschine oder Walzwerk als Hauptursache für den vorhergesagten Oberflächendefekt bestimmt; und
- Bestimmen einer angepassten Regelgröße mittels eines Expertensystems zur Vermeidung des vorhergesagten Oberflächendefekts, wobei das Expertensystem Informationen enthält, wie sich Änderungen einer Regelgröße auf Oberflächendefekte auswirken, und wobei das Expertensystem nur die einzelne Regelgröße anpasst, die vom Auswertemodell als Hauptursache für den vorhergesagten Oberflächendefekt bestimmt wurde,
- Übermitteln der einzelnen bestimmten angepassten Regelgröße an eine Prozessautomation des entsprechenden Anlagenteils zur automatischen oder teilautomatischen Umsetzung mit manueller Überwachung.

Die Regelgröße wird nur angepasst, wenn die Produktion weiterhin sichergestellt ist und keine Produktionsunterbrechung oder kein Produktionsausfall droht.

Gemäß dem erfindungsgemäßen Verfahren werden die relevanten Regelgrößen in den Anlagenteilen Stahlwerk, Pfannenofen, Gießmaschine und Walzwerk erfasst. Diese erfassten Regelgrößen werden entsprechenden Positionen des hergestellten Produkts zugeordnet. Dadurch kann jederzeit überprüft werden, welche Regelgrößen zum Zeitpunkt der entsprechenden Herstellung des Produkts in einem Anlagenteil erfasst wurden, beispielsweise Zusammensetzung der Legierung, Temperatur im Pfannenofen, Gießgeschwindigkeiten der Gießmaschine oder Parameter im Walzwerk.

Ferner werden Oberflächendefekte, wie beispielsweise Risse, insbesondere Längsrisse, oder Schalen an dem hergestellten Produkt erfasst. Gleichzeitig wird die Position des erfassten Oberflächendefekts am hergestellten Produkt erfasst. Durch einen Abgleich über die Position lassen sich die zum Zeitpunkt der Herstellung des entsprechenden Produktabschnitts an dieser Position in dem jeweiligen Anlagenteil erfassten Regelgrößen ermitteln. Es ist dadurch beispielsweise bekannt, aus welchen Bestandteilen die Legierung zur Herstellung des Produktabschnitts bestand, welche Temperatur im Pfannenofen vorherrschte, mit welcher Geschwindigkeit dieser Produktabschnitt gegossen wurde oder unter welchen Bedingungen der Produktabschnitt gewalzt wurde.

Nachfolgend wird gemäß dem erfindungsgemäßen Verfahren wenigstens ein Vorhersagemodell genutzt, um Oberflächendefekte vorherzusagen. Dies erfolgt auf Basis der erfassten relevanten Regelgrößen, der den Regelgrößen zugeordneten Positionen am hergestellten Produkt und der erfassten Oberflächendefekte und deren Position am hergestellten Produkt. Das wenigstens eine Vorhersagemodell basiert auf einer künstlichen Intelligenz.

Die Vorhersage des Vorhersagemodells wird gemäß dem erfindungsgemäßen Verfahren durch ein Auswertemodell ausgewertet. Dabei wird eine Fehlerursache für den vom Vorhersagemodell vorhergesagten Oberflächendefekt bestimmt. Es wird also die wahrscheinlichste Ursache für den vorhergesagten Oberflächendefekt bestimmt. Diese Fehlerursache umfasst eine Regelgröße der Anlagenteile Stahlwerk, Pfannenofen, Gießmaschine oder Walzwerk. Das Auswertemodell benennt somit die Regelgröße, welche aller Wahrscheinlichkeit nach die Hauptursache für den vorhergesagten Oberflächendefekt ist.

Anschließend wird gemäß dem erfindungsgemäßen Verfahren eine angepasste Regelgröße zur Vermeidung des vorhergesagten Oberflächendefekts bestimmt. Dies erfolgt mittels eines Expertensystems, welches die Regelgröße anpasst, die vom Auswertemodell als Fehlerursache bestimmt wurde. Das Expertensystem bestimmt somit eine sinnvolle Anpassung der vom Auswertemodell bestimmten Regelgröße. Dazu enthält das Expertensystem zweckmäßigerweise Informationen, wie sich Änderungen einer Regelgröße auf Oberflächendefekte auswirken, insbesondere wie diese vermieden werden können.

Gemäß dem erfindungsgemäßen Verfahren wird somit ein wahrscheinlicher zukünftiger Oberflächendefekt vorhergesagt. Die für diesen wahrscheinlichen Oberflächenfehler verursachende Regelgröße wird bestimmt und anschließend wird diese Regelgröße angepasst, um den vorhergesagten Oberflächendefekt zu vermeiden.

Erfindungsgemäß umfasst das Verfahren den Schritt des Übermittelns der bestimmten angepassten Regelgröße an die Prozessautomation des entsprechenden Anlagenteils zur automatischen Umsetzung. Die angepasste Regelgröße wird also automatisch an den entsprechenden Anlagenteil übermittelt und dort umgesetzt. Alternativ kann die angepasste Regelgröße auch erst nach einer manuellen Freigabe eines Bedieners übermittelt und/oder umgesetzt werden. Die angepasste Regelgröße kann in dieser Alternative nochmals vom Bediener kontrolliert werden, bevor diese zur Steuerung des Anlagenteils umgesetzt wird.

Nach einer erfindungsgemäßen Variante betreffen die erfassten relevanten Regelgrößen und/oder die bestimmte angepasste Regelgröße der Level-2 der Automatisierungsebene, vorzugsweise zusätzlich der Level-1 der Automatisierungsebene. Die Regelgrößen sind beispielsweise Gießgeschwindigkeit, Gießgeschwindigkeitsabweichung, Wassermengen der Strangkühlung in der Gießmaschine oder die Pfannentemperatur am Ende der Sekundärmetallurgie, Überhitzung einer Gießpfanne, Mengen bei der Calcium- und Aluminiumbehandlung im Pfannenofen, Kupferdicken der Breitseiten der Gießkokille, Spritwasserplan zur Steuerung der Sekundärkühlung, Spülparameter am Pfannenofen, Stahlwerkseinstellungen und Vorgabezeiten, Kokillenkonizität, Kokillenkühlwasser, Strom in der elektromechanischen Bremse und dem Kokillenrührer und/oder Strangrührer, Argonflüsse im Gießrohr gegen Clogging.

Gemäß einer zweckmäßigen Variante der Erfindung berücksichtigt das Zuordnen der erfassten Regelgrößen zu entsprechenden Positionen des hergestellten Produkts die in den einzelnen Anlagenteilen Stahlwerk, Pfannenofen, Gießmaschine und Walzwerk potentiell auftretende Längenänderung des Zwischenprodukts oder Endprodukts. Dies betrifft beispielsweise das Gießen einer Schmelze zu einer Bramme oder einem Langprodukt und ein nachfolgendes Walzen. Dadurch wird gewährleistet, dass am Ende der Prozesskette Informationen darüber vorliegen, welche Regelgrößen bei der Herstellung eines bestimmten Produktabschnitts in allen Anlagenteilen erfasst wurden.

In einer bevorzugten Variante der Erfindung beziehen sich die erfassten oder vorhergesagten Oberflächendefekte auf das Ende der Produktionskette, vorzugsweise auf die vorgesehene Verwendung beim Endabnehmer. Unregelmäßigkeiten der Oberfläche des hergestellten Produkts werden in dieser Variante nur dann berücksichtigt, wenn diese für die vorgesehene Verwendung beim Endabnehmer relevant sind. Kleinere Oberflächenfehler bei Produkten mit geringeren Anforderungen können somit vernachlässigt werden. Bei Produkten mit hohen Anforderungen an die Oberfläche, wie bei einer Verwendung im Bereich einer automobilen Außenhaut, müssen andererseits auch kleinste Oberflächendefekte berücksichtigt werden, um nachfolgende Reklamationen oder Abwertungen zu vermeiden.

Nach einer besonders bevorzugten Variante der Erfindung erfolgt die Vorhersage von Oberflächendefekten mittels mehrerer Vorhersagemodelle, wobei jedes Vorhersagemodell auf einen bestimmten Oberflächendefekt fokussiert ist. Durch die Verwendung separater Vorhersagemodelle für unterschiedliche Oberflächendefekte lässt sich die Genauigkeit der Vorhersage verbessern, da die Modelle auf einen bestimmten Oberflächendefekt fokussiert werden können. Eine sogenannte Datenverunreinigung unter den separaten Modellen wird dadurch vermieden.

Gemäß einer bevorzugten Variante erfolgt die Vorhersage eines bestimmten Oberflächendefekts dadurch, dass eines der mehreren Vorhersagemodelle anschlägt, wobei der bestimmte Oberflächendefekt dem Oberflächendefekt entspricht, auf welchen das entsprechende Vorhersagemodell fokussiert ist. Die Vorhersage eines Oberflächendefekts erfolgt somit quasi automatisch, da das auf einen bestimmten Oberflächenfehler fokussierte Modell anschlägt, wenn die entsprechenden Variablen des Modells erfüllt sind. Es muss nur festgestellt werden, welches der separaten Modelle angeschlagen hat.

In einer vorteilhaften Variante der Erfindung beschreibt das Auswertemodell die Zusammenhänge von Oberflächendefekten mit dem zugehörigen Entstehungsmechanismus des Oberflächendefekts und den relevanten Regelgrößen. Mittels des Entstehungsmechanismus des Oberflächendefekts kann das Auswertemodell die für den Oberflächendefekt maßgebende Regelgröße bestimmen. Da das Auswertemodell den Mechanismus hinter dem Oberflächenfehler kennt, kann es auch die zugehörige Regelgröße in einem der Anlagenteile Stahlwerk, Pfannenofen, Gießmaschine und Walzwerk identifizieren.

Nach der Erfindung benennt das Auswertemodell eine Regelgröße, welche maßgeblich für den vom Vorhersagemodell vorausgesagten Oberflächendefekt ist.

Gemäß einer weiteren vorteilhaften Variante der Erfindung beschreibt das Expertensystem sinnvolle Änderungen für bestimmte Regelgrößen, insbesondere Parameterräume für Regelgrößen und/oder Schrittgrößen für Änderungen von Regelgrößen. Das Expertensystem hat somit genaue Kenntnis über sämtliche Regelgrößen der Anlagenteile Stahlwerk, Pfannenofen, Gießmaschine und Walzwerk und auch in welchem Rahmen und in welcher Änderungsrate diese angepasst werden können bzw. sollten.

Nach einer zweckmäßigen Variante der Erfindung kann die angepasste Regelgröße für unterschiedliche Zeitpunkte bestimmt werden, beispielsweise zur sofortigen Umsetzung, zur Umsetzung für die nachfolgende Schmelze einer Pfanne, nach einer durchgeführten Wartung oder zu anderen Zeitpunkten. Das erfindungsgemäße Verfahren bestimmt somit auch einen bevorzugten Zeitpunkt der Umsetzung der angepassten Regelgröße. Hierbei werden angepasste Regelgrößen zur direkten Ausführung, zur Ausführung für die nächstmöglich bereitzustellende Gießpfanne oder für den nächsten Guß vorgegeben. Hierbei kann eine Gießgeschwindigkeit direkt online als Regelgröße angepasst werden. Eine Überhitzungstemperatur als anzupassende Regelgröße wird erst mit einer der nächsten Gießpfannen berücksichtigt werden können. Eine größere Kupferdicke der Breitseiten der Kokille kann als Gegenmaßnahme z.B. für Längsrisse erst mit dem nächsten Guss durch Tausch der Kokille berücksichtigt werden.

Vorzugsweise wird der Betreiber der Produktionsanlage über den Zeitpunkt der Umsetzung der angepassten Regelgröße informiert und gegebenenfalls über durchzuführende Tätigkeiten, wie beispielsweise durchzuführende Wartungsarbeiten. Ferner kann der Anlagenbetreiber zusätzlich über die in der Zwischenzeit erzielbare Produktqualität informiert werden. Auch kann der Anlagenbetreiber über mögliche Nachbearbeitungen der hergestellten Produkte zur Verbesserung der Produktqualität informiert werden, insbesondere für den Zeitraum, bis die angepassten Regelgröße umgesetzt wurde und die gewünschte Produktqualität gewährleistet ist.

Als defekt vorhergesagte Brammen, die nicht vermieden werden können, sind vorzugsweise als solche gekennzeichnet. Ein weiterer Vorteil der Erfindung liegt in einer selektiven Adjustage der Brammen zwischen Gießanlage und Walzwerk, um eine gezielte Instandsetzung betroffener Brammen zu ermöglichen. Im Gegenzug werden nicht defekte Brammen für den Heißeinsatz freigegeben.

Erfindungsgemäß wird die bestimmte angepasste Regelgröße automatisch oder nach manueller Freigabe an die Prozessautomation des zugehörigen Anlagenteils zur Ausführung übermittelt. Das erfindungsgemäße Verfahren kann somit vollautomatisch oder teilautomatisch mit manueller Überwachung ausgeführt werden.

Gemäß einer erfindungsgemäßen Variante wird das Auswertemodell und/oder das Expertensystem anfänglich mit Expertenwissen konfiguriert. Es werden also die Erfahrungen des Anlagenbetreibers, insbesondere des Fachpersonals des Anlagenbetreibers, bei der Konfiguration des Auswertemodells und/oder des Expertensystems berücksichtigt.

Nach einer weiteren Variante der Erfindung sind das Auswertemodell und/oder das Expertensystem selbstlernend. Somit verbessern sich das Auswertemodell und/oder das Expertensystem über die Betriebsdauer, so dass sich mit fortschreitender Ausführung des Verfahrens die Ergebnisse verbessern.

In einer zweckmäßigen Variante der Erfindung wird das Verfahren in Echtzeit ausgeführt, insbesondere kontinuierlich.

Gemäß einer vorteilhaften Variante der Erfindung ist das Expertensystem regelbasiert. Das Expertensystem gibt also feste Regeln vor, wie bestimmte Regelgrößen der Anlagenteile Stahlwerk, Pfannenofen, Gießmaschine und Walzwerk angepasst werden sollen. Diese Regeln können mit der Zeit angepasst werden, insbesondere wenn das Expertensystem selbstlernend ausgebildet ist.

Nach der Erfindung bestimmt das Auswertemodell eine einzige Regelgröße als Fehlerursache des vom Vorhersagemodell vorhergesagten Oberflächendefekts und das Expertensystem passt diese einzige Regelgröße zur Vermeidung des vorhergesagten Oberflächendefekts an. Somit passt das erfindungsgemäße Verfahren in dieser vorteilhaften Variante nur eine einzige Regelgröße an, was einem minimalen Prozesseingriff entspricht. Das Auswertemodell bestimmt die für den vorhergesagten Oberflächendefekt wahrscheinlichste Regelgröße als Fehlerursache und genau diese eine Regelgröße wird nachfolgend vom Expertensystem angepasst. Es werden also nicht wie beim Stand der Technik mehrere Regelgrößen angepasst, sondern es wird nur eine einzige Regelgröße angepasst. Dadurch wird das Risiko minimiert, dass durch eine gleichzeitige Anpassung mehrere Regelgrößen neue Oberflächendefekte entstehen.

Ferner berücksichtigt das erfindungsgemäße Verfahren in allen zuvor beschriebenen Varianten, dass die Produktion immer vor geht, der Herstellungsprozess also nur angepasst wird, wenn die Produktion weiterhin sichergestellt ist. Eine Anpassung des Herstellungsprozesses erfolgt nicht, wenn dadurch eine Produktionsunterbrechung oder gar ein Produktionsausfall droht.

Nachfolgend wird die Erfindung anhand von in den Figuren dargestellten Ausführungsbeispielen näher erläutert. Es zeigen:
- Fig. 1: eine schematische Ansicht einer Prozesskette mit einer Stranggussanlage zur Herstellung von Produkten wie Dickbrammen, Dünnbrammen oder Langprodukten;
- Fig. 2: eine schematische Ansicht eines Regelkreises eines Anlagenteils der Stranggussanlage aus Fig. 1;
- Fig. 3: ein Ablaufdiagramm eines erfindungsgemäßen Verfahrens;
- Fig. 4: einige Details bezüglich des erfindungsgemäßen Verfahrens;
- Fig. 5: eine Tabelle mit Informationen zu dem erfindungsgemäßen Verfahren; und
- Fig. 6: den beispielhaften Einsatz des erfindungsgemäßen Verfahrens.

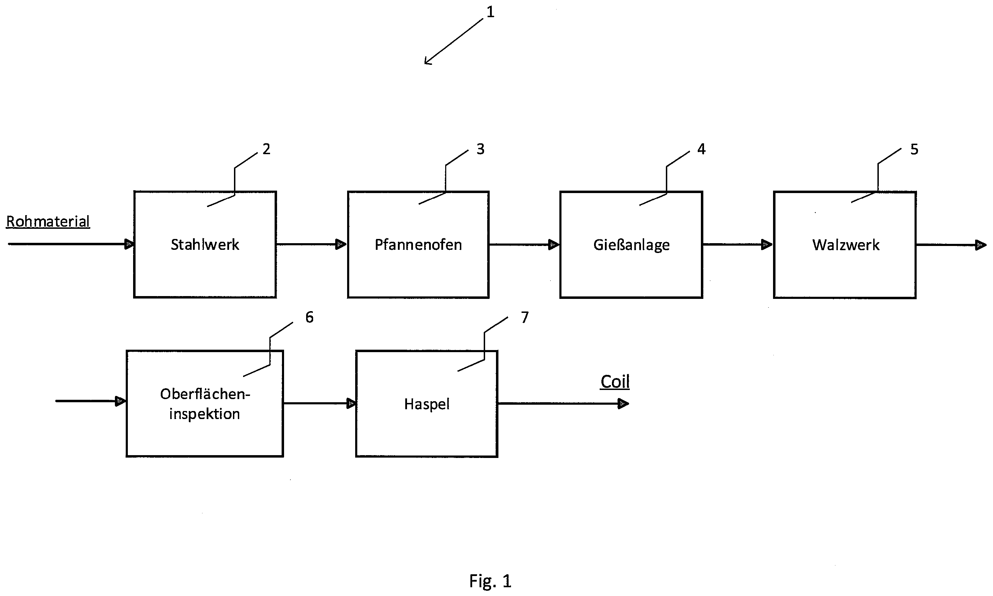

Fig. 1 zeigt eine schematische Ansicht einer Prozesskette mit einer Stranggussanlage 1 zur Herstellung von Produkten wie Dickbrammen, Dünnbrammen oder Langprodukten. Die Stranggussanlage 1 umfasst dabei beispielsweise die Anlagenteile Stahlwerk 2, Pfannenofen 3, Gießanlage 4, Walzwerk 5, Oberflächeninspektion 6 und Haspel 7.

In dem Stahlwerk 2 wird aus Eisenerz und Roheisen eine Eisenlegierung mit bestimmtem Kohlenstoffgehalt hergestellt. Dazu wird das Eisenerz und Roheisen zumeist in Konvertern oder Lichtbogenöfen zu Flüssigstahl geschmolzen. Das Stahlwerk 2 ist Teil der Primärmetallurgie. Der Pfannenofen 3 dient zum Aufheizen und Warmhalten des Flüssigstahls in der Sekundärmetallurgie. Sie werden auch zur Behandlung des Flüssigstahls eingesetzt, um die korrekte Gießtemperatur zu erreichen und um die genaue Analyse einstellen zu können. Der Pfannenofen 3 wird beispielsweise als ein- oder dreiphasiger Lichtbogenofen ausgeführt. In der Gießanlage 4 wird der Flüssigstahl durch eine gekühlte bodenlose Kokille gegossen, wodurch die äußere Schale erstarrt. Der gegossene Strang wird dabei nach unten, seitwärts oder oben abgezogen. Dieser Vorgang wird auch als Urformen bezeichnet. In dem Walzwerk 5 werden die beim Urformen hergestellten Barren, Brammen, Blöcke oder Knüppel zu Blechen, Bändern, Rohren, Stäben, Trägern, Schienen oder Draht weiterverarbeitet. Dazu werden die Barren, Brammen, Blöcke oder Knüppel zwischen rotierenden Walzen gewalzt. Die so hergestellten Halbzeuge (Produkte) werden in der Oberflächeninspektion 6 auf Oberflächendefekte untersucht. Dies kann automatisch mittels einer Bildauswertung oder manuell durch Inspektion erfolgen. Nachfolgend wird das so hergestellte Produkt in der Haspel 7 zu einem Coil aufgewickelt und kann so zu dem Abnehmer, wie beispielsweise einem Automobilhersteller, transportiert werden.

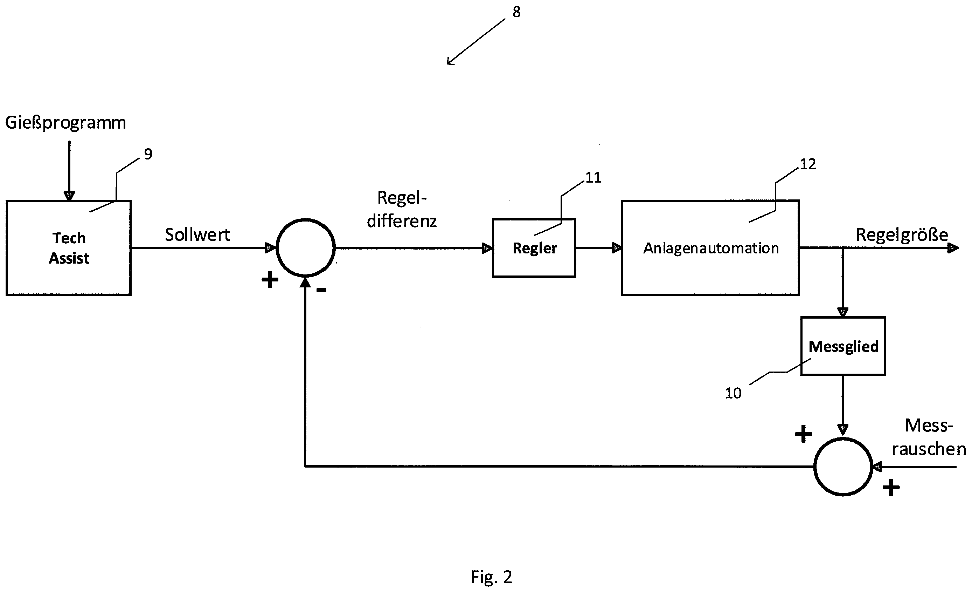

Fig. 2 zeigt eine schematische Ansicht eines Regelkreises eines Anlagenteils der Stranggussanlage 1 aus Fig. 1. Der in Fig. 2 dargestellte Regelkreis 8 gehört zu der Gießanlage 4. Basierend auf einem Gießprogramm bestimmt der sogenannte Tech-Assist 9 Sollwerte für die Anlagenautomation 12 der Gießanlage 4. Über entsprechendes Messglied 10 in der Gießanlage 4 wird der tatsächliche Wert gemessen, welcher zu dem bestimmten Sollwert korrespondiert. Dabei wird ggf. Messrauschen addiert. Die Differenz zwischen bestimmtem Sollwert und Messwert inklusive Messrauschen wird einem Regler 11 zugeführt, welcher eine angepasste Regelgröße für die Anlagenautomation 12 der Gießanlage 4 bestimmt. Die angepasste Regelgröße kann für eine nachfolgende Auswertung an eine externe Speichereinheit wie eine Datenbank übermittelt werden.

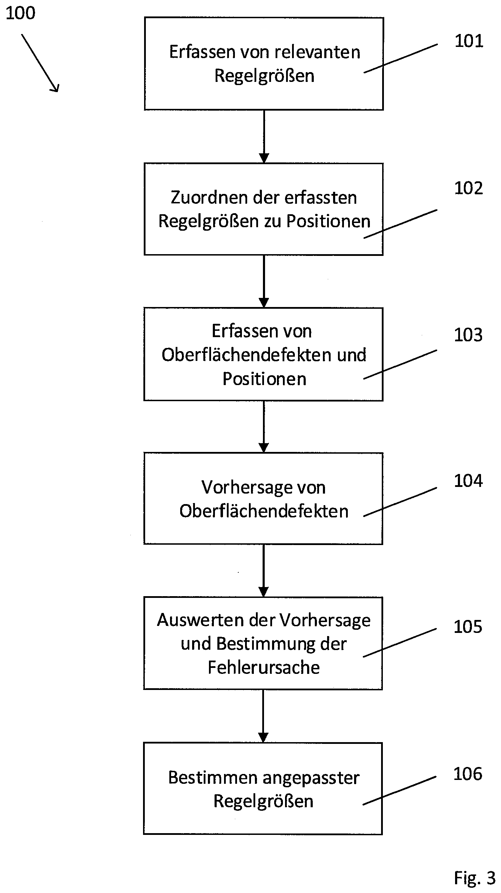

Fig. 3 zeigt ein Ablaufdiagramm eines erfindungsgemäßen Verfahrens 100 zur Vermeidung von Oberflächendefekten bei der Herstellung von Produkten wie Dickbrammen, Dünnbrammen oder Langprodukten in einer Stranggussanlage 1 umfassend wenigstens die Anlagenteile Stahlwerk 2, Pfannenofen 3, Gießmaschine 4, Walzwerk 5 und Oberflächeninspektion 6. Das erfindungsgemäße Verfahren 100 umfasst dabei wenigstens die folgenden Schritte:
- Erfassen 101 von relevanten Regelgrößen in den Anlagenteilen Stahlwerk 2, Pfannenofen 3, Gießmaschine 4 und Walzwerk 5, wobei die relevanten Regelgrößen zumindest die Zusammensetzung der Legierung, die Temperatur im Pfannenofen 3, die Gießgeschwindigkeiten der Gießmaschine 4 und Parameter im Walzwerk 5 umfassen;
- Zuordnen 102 der erfassten Regelgrößen zu entsprechenden Positionen des hergestellten Produkts;
- Erfassen 103 von Oberflächendefekten und deren Position am hergestellten Produkt durch die Oberflächeninspektion 6;
- Vorhersage 104 von wahrscheinlichen zukünftigen Oberflächendefekten mittels wenigstens eines Vorhersagemodells 13 auf Basis der erfassten relevanten Regelgrößen, der den Regelgrößen zugeordneten Positionen am hergestellten Produkt und der erfassten Oberflächendefekte und deren Position am hergestellten Produkt, wobei das wenigstens eine Vorhersagemodell 13 auf einer künstlichen Intelligenz basiert;
- Auswerten 105 der Vorhersage des Vorhersagemodells 13 mittels eines Auswertemodells 14 zur Bestimmung einer Fehlerursache des vom Vorhersagemodell 13 vorhergesagten Oberflächendefekts, wobei das Auswertemodell 14 die wahrscheinlichste Fehlerursache für den vorhergesagten Oberflächendefekt und eine einzige, wahrscheinlichste Regelgröße der Anlagenteile Stahlwerk 2, Pfannenofen 3, Gießmaschine 4 und Walzwerk 5 als Hauptursache für den vorhergesagten Oberflächendefekt bestimmt; und
- Bestimmen 106 einer angepassten Regelgröße mittels eines Expertensystems 15 zur Vermeidung des vorhergesagten Oberflächendefekts, wobei das Expertensystem 15 Informationen enthält, wie sich Änderungen einer Regelgröße auf Oberflächendefekte auswirken, und wobei das Expertensystem 15 die Regelgröße anpasst, die vom Auswertemodell 14 als Fehlerursache bestimmt wurde,
- Übermitteln der einzelnen bestimmten angepassten Regelgröße an eine Prozessautomation des entsprechenden Anlagenteils zur automatischen oder teilautomatischen Umsetzung mit manueller Überwachung..

Die in Schritt 101 erfassten relevanten Regelgrößen der gesamten Stranggussanlage 1 mit den Anlagenteilen Stahlwerk 2, Pfannenofen 3, Gießmaschine 4, Walzwerk 5 werden vorzugsweise zentral gespeichert, so dass jederzeit und von beliebigen Komponenten auf diese Daten zugegriffen werden kann. Die erfassten relevanten Regelgrößen und/oder die bestimmte angepasste Regelgrößen betreffen insbesondere das Level-2 der Automatisierungsebene, vorzugsweise zusätzlich das Level-1 der Automatisierungsebene.

Erfindungsgemäß wird die im Schritt 106 bestimmte angepasste Regelgröße automatisch oder nach manueller Freigabe an die Prozessautomation des zugehörigen Anlagenteils zur Ausführung übermittelt.

Bei der Zuordnung 102 der erfassten Regelgrößen zu entsprechenden Positionen des hergestellten Produkts werden die in den einzelnen Anlagenteilen Stahlwerk 2, Pfannenofen 3, Gießmaschine 4 und Walzwerk 5 potentiell auftretende Längenänderung des Zwischenprodukts oder Endprodukts berücksichtigt.

Die erfassten oder vorhergesagten Oberflächendefekte beziehen sich erfindungsgemäß bevorzugt auf das Ende der Produktionskette, vorzugsweise auf die vorgesehene Verwendung beim Endabnehmer.

In einer bevorzugten Variante des erfindungsgemäßen Verfahrens 100 erfolgt die Vorhersage 104 von Oberflächendefekten mittels mehrerer Vorhersagemodelle 13, wobei jedes Vorhersagemodell 13 auf einen bestimmten Oberflächendefekt fokussiert ist. In dieser Variante erfolgt die Vorhersage 104 eines bestimmten Oberflächendefekts dadurch, dass eines der mehreren Vorhersagemodelle 13 anschlägt, wobei der bestimmte Oberflächendefekt dem Oberflächendefekt entspricht, auf welchen das entsprechende Vorhersagemodell 13 fokussiert ist.

Das Auswertemodell 14 beschreibt zweckmäßigerweise die Zusammenhänge von Oberflächendefekten mit dem zugehörigen Entstehungsmechanismus des Oberflächendefekts und den relevanten Regelgrößen.

Das Expertensystem 15 beschreibt vorzugsweise sinnvolle Änderungen für bestimmte Regelgrößen, insbesondere Parameterräume für Regelgrößen und/oder Schrittgrößen für Änderungen von Regelgrößen.

Das erfindungsgemäße Verfahren 100 bestimmt die angepasste Regelgröße zweckmäßigerweise für unterschiedliche Zeitpunkte, beispielsweise zur sofortigen Umsetzung, zur Umsetzung für die nachfolgende Schmelze einer Pfanne, nach einer durchgeführten Wartung oder zu anderen Zeitpunkten.

Vorzugsweise werden das Auswertemodell 14 und/oder das Expertensystem 15 anfänglich mit Expertenwissen konfiguriert. Insbesondere sind das Auswertemodell 14 und/oder das Expertensystem 15 selbstlernend ausgebildet. Das Expertensystem 15 ist beispielsweise regelbasiert.

Bevorzugt wird das erfindungsgemäße Verfahren 100 in Echtzeit ausgeführt, insbesondere kontinuierlich.

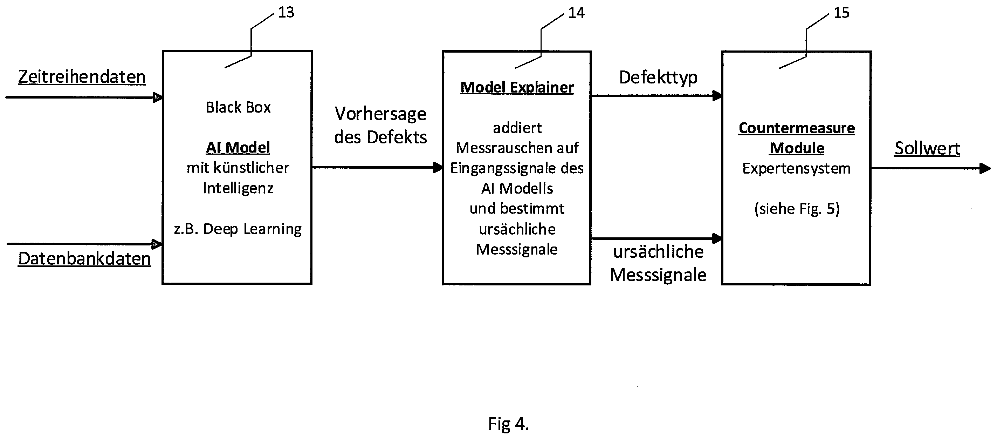

Fig. 4 zeigt einige Details bezüglich des Vorhersagemodells 13, des Auswertemodells 14 und des Expertensystems 15. Das wenigstens eine Vorhersagemodell 13 greift auf die in Schritt 101 erfassten relevanten Regelgrößen der Stranggussanlage 1 und die erfassten Oberflächendefekte zu, welche beispielsweise in einer Datenbank gespeichert wurden und daher in Fig. 4 als Datenbankdaten bezeichnet sind. Ferner greift das Vorhersagemodell 13 auf die den erfassten Regelgrößen und Oberflächendefekten zugeordneten Positionen am hergestellten Produkt zu, welche in Fig. 4 mit Zeitreihendaten bezeichnet sind. Das wenigstens eine Vorhersagemodell 13 wertet die vorgenannten Daten aus, um auf dieser Basis Oberflächendefekte vorherzusagen. Dabei basiert das wenigstens eine Vorhersagemodell 13 auf einer künstlichen Intelligenz.

Der vorhergesagte Oberflächendefekt, insbesondere der Defekttyp und Defektort, werden an das Auswertemodell 14 übermittelt, welches eine Fehlerursache für den vorhergesagten Oberflächendefekt bestimmt. Dazu sind in dem Auswertemodell 14 vorzugsweise die Zusammenhänge von Oberflächendefekten mit dem zugehörigen Entstehungsmechanismus des Oberflächendefekts und der relevanten Regelgröße beschrieben. Die vom Auswertemodell 14 bestimmte Fehlerursache umfasst eine Regelgröße der Anlagenteile Stahlwerk 2, Pfannenofen 3, Gießmaschine 4 und Walzwerk 5. Das Auswertemodell 14 leitet die bestimmte Fehlerursache und vorzugsweise den vorhergesagten Oberflächendefekt des Vorhersagemodells 13 an das Expertensystem 15, welches eine angepasste Regelgröße bestimmt, zur Vermeidung des vorhergesagten Oberflächendefekts. Dabei passt das Expertensystem 15 die Regelgröße an, die vom Auswertemodell 14 als Fehlerursache bestimmt wurde.

Dazu enthält das Expertensystem 15 Informationen für sinnvolle Änderungen für bestimmte Regelgrößen, insbesondere Parameterräume für Regelgrößen und/oder Schrittgrößen für Änderungen von Regelgrößen.

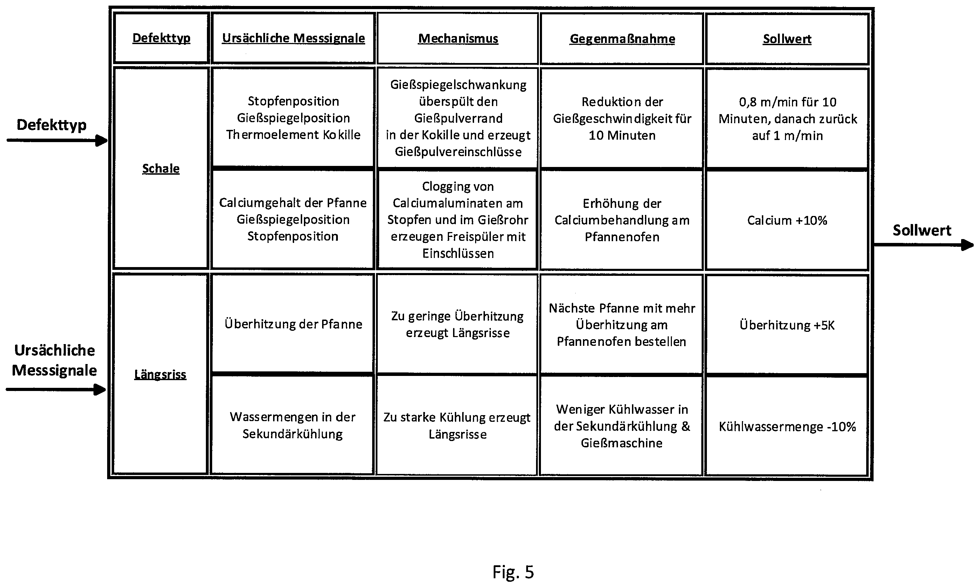

In Fig. 5 ist eine Tabelle dargestellt, in welcher für die beiden beispielhaften Defekttypen "Schale" und "Längsriss" mögliche Entstehungsmechanismen und die ursächlichen Regelgrößen (Messsignale), sowie entsprechende Gegenmaßnahmen und entsprechende Anpassungen der Regelgrößen aufgeführt sind. Bei dieser Aufstellung handelt es sich lediglich um ein Beispiel, welches der Übersicht halber vereinfacht wurde.

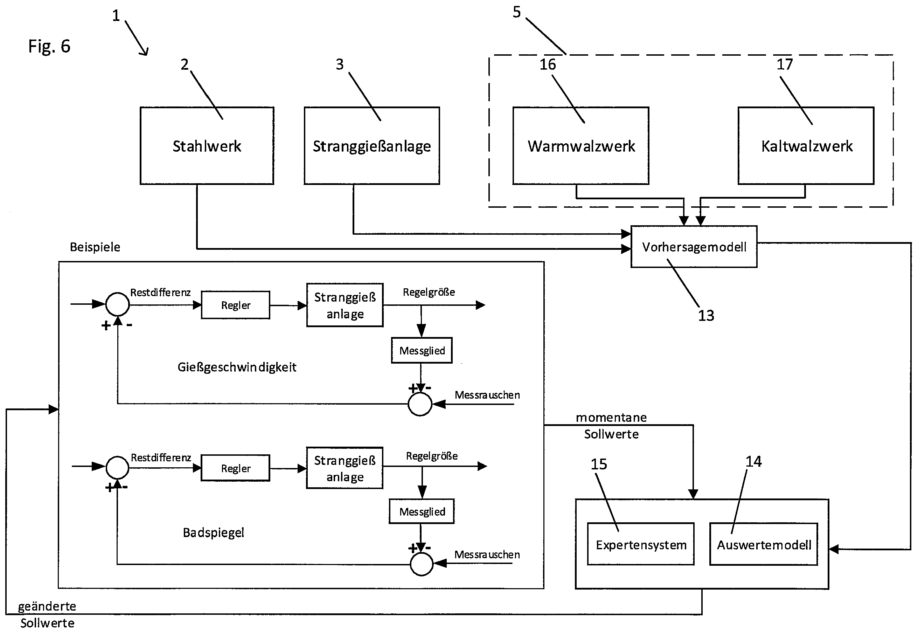

Fig. 6 zeigt den beispielhaften Einsatz des erfindungsgemäßen Verfahrens 100 zur Vermeidung von Oberflächendefekten bei der Herstellung von Produkten wie Dickbrammen, Dünnbrammen oder Langprodukten in einer Stranggussanlage 1 umfassend die Anlagenteile Stahlwerk 2, Stranggießanlage mit Pfannenofen 3 und Gießmaschine 4, und Walzwerk 5 mit Warmwalzwerk 16 und Kaltwalzwerk 17. Während des Herstellungsprozesses werden in den Stranggießanlage mit Pfannenofen 3 und Gießmaschine 4, und Walzwerk 5 mit Warmwalzwerk 16 und Kaltwalzwerk 17 relevante Regelgrößen erfasst, welche entsprechenden Positionen des hergestellten Produkts zugeordnet werden. In einem dem Herstellungsprozess nachgelagerten oder in diesen integrierten Schritt werden Oberflächenfehler und deren Position am hergestellten Produkt erfasst.

Auf Basis der erfassten relevanten Regelgrößen, der den Regelgrößen zugeordneten Positionen am hergestellten Produkt und der erfassten Oberflächendefekte und deren Position am hergestellten Produkt erfolgt mittels eines Vorhersagemodells 13 eine Vorhersage von Oberflächendefekten, wobei das Vorhersagemodell 13 auf einer künstlichen Intelligenz basiert.

Die Vorhersage des Vorhersagemodells wird mittels eines Auswertemodells 14 ausgewertet, zur Bestimmung einer Fehlerursache des vom Vorhersagemodell 13 vorhergesagten Oberflächendefekts, wobei die Fehlerursache eine Regelgröße der Anlagenteile Stahlwerk 2, Pfannenofen 3, Gießmaschine 4 und Walzwerk 5 betrifft.

Mittels eines Expertensystems 15 wird eine angepasste Regelgröße bestimmt, zur Vermeidung des vorhergesagten Oberflächendefekts. Das Expertensystem 15 passt die vom Auswertemodell 14 als Fehlerursache bestimmte Regelgröße an.

Die angepassten Regelgröße wird dann als neuer Sollwerte an die Anlagenautomation des entsprechenden Anlagenteils übergeben. In dem dargestellten Ausführungsbeispiel der Fig. 6 beispielsweise an die Stranggießanlage 3 betreffend die Gießgeschwindigkeit oder den Badspiegel.

### Bezugszeichenliste

- 1: Stranggussanlage
- 2: Stahlwerk
- 3: Pfannenofen
- 4: Gießanlage
- 5: Walzwerk
- 6: Oberflächeninspektion
- 7: Haspel
- 8: Regelkreis
- 9: Tech-Assist
- 10: Messglied
- 11: Regler
- 12: Anlagenautomation
- 13: Vorhersagemodell
- 14: Auswertemodell
- 15: Expertensystem
- 16: Warmwalzwerk
- 17: Kaltwalzwerk
- 100: Verfahren
- 101: Erfassen Regelgrößen
- 102: Zuordnen Position
- 103: Erfassen Oberflächendefekt und Position
- 104: Vorhersage von Oberflächendefekten
- 105: Auswerten der Vorhersage
- 106: Bestimmen einer angepasster Regelgröße

## Patentansprüche

1. Verfahren (100) zur Vermeidung von Oberflächendefekten bei der Herstellung von Produkten wie Dickbrammen, Dünnbrammen oder Langprodukten in einer Stranggussanlage (1) umfassend wenigstens die Anlagenteile Stahlwerk (2), Pfannenofen (3), Gießmaschine (4), Walzwerk (5) und Oberflächeninspektion (6), umfassend die Schritte:
- Erfassen (101) von relevanten Regelgrößen in den Anlagenteilen Stahlwerk (2), Pfannenofen (3), Gießmaschine (4) und Walzwerk (5), wobei die relevanten Regelgrößen zumindest die Zusammensetzung der Legierung, die Temperatur im Pfannenofen (3), die Gießgeschwindigkeiten der Gießmaschine (4) und Parameter im Walzwerk (5) umfassen;
- Zuordnen (102) der erfassten Regelgrößen zu entsprechenden Positionen des hergestellten Produkts;
- Erfassen (103) von Oberflächendefekten und deren Position am hergestellten Produkt durch die Oberflächeninspektion (6);
- Vorhersage (104) von wahrscheinlichen zukünftigen Oberflächendefekten mittels wenigstens eines Vorhersagemodells (13) auf Basis der erfassten relevanten Regelgrößen, der den Regelgrößen zugeordneten Positionen am hergestellten Produkt und der erfassten Oberflächendefekte und deren Position am hergestellten Produkt, wobei das wenigstens eine Vorhersagemodell (13) auf einer künstlichen Intelligenz basiert;
**gekennzeichnet durch**
- Auswerten (105) der Vorhersage des Vorhersagemodells (13) mittels eines Auswertemodells (14) zur Bestimmung einer Fehlerursache des vom Vorhersagemodell (13) vorhergesagten Oberflächendefekts, wobei das Auswertemodell (14) die wahrscheinlichste Fehlerursache für den vorhergesagten Oberflächendefekt und eine einzige, wahrscheinlichste Regelgröße der Anlagenteile Stahlwerk (2), Pfannenofen (3), Gießmaschine (4) und Walzwerk (5) als Hauptursache für den vorhergesagten Oberflächendefekt bestimmt; und
- Bestimmen (106) einer angepassten Regelgröße mittels eines Expertensystems (15) zur Vermeidung des vorhergesagten Oberflächendefekts, wobei das Expertensystem (15) Informationen enthält, wie sich Änderungen einer Regelgröße auf Oberflächendefekte auswirken, und wobei das Expertensystem (15) nur die einzelne Regelgröße anpasst, die vom Auswertemodell (14) als Hauptursache für den vorhergesagten Oberflächendefekt bestimmt wurde,
- Übermitteln der einzelnen bestimmten angepassten Regelgröße an eine Prozessautomation des entsprechenden Anlagenteils zur automatischen oder teilautomatischen Umsetzung mit manueller Überwachung.

2. Verfahren (100) nach Anspruch 1, wobei die erfassten relevanten Regelgrößen und/oder die bestimmte angepasste Regelgröße den Level-2 der Automatisierungsebene betreffen, vorzugsweise zusätzlich den Level-1 der Automatisierungsebene.

3. Verfahren (100) nach einem der Ansprüche 1 bis 2, wobei das Zuordnen (102) der erfassten Regelgrößen zu entsprechenden Positionen des hergestellten Produkts die in den einzelnen Anlagenteilen Stahlwerk (2), Pfannenofen (3), Gießmaschine (4) und Walzwerk (5) potentiell auftretende Längenänderung des Zwischenprodukts oder Endprodukts berücksichtigt.

4. Verfahren (100) nach einem der Ansprüche 1 bis 3, wobei sich die erfassten oder vorhergesagten Oberflächendefekte auf das Ende der Produktionskette, vorzugsweise auf die vorgesehene Verwendung beim Endabnehmer, beziehen.

5. Verfahren (100) nach einem der Ansprüche 1 bis 4, wobei die Vorhersage (104) von Oberflächendefekten mittels mehrerer Vorhersagemodelle (13) erfolgt, wobei jedes Vorhersagemodell (13) auf einen bestimmten Oberflächendefekt fokussiert ist.

6. Verfahren (100) nach Anspruch 5, wobei die Vorhersage (104) eines bestimmten Oberflächendefekts dadurch erfolgt, dass eines der mehreren Vorhersagemodelle (13) anschlägt, wobei der bestimmte Oberflächendefekt dem Oberflächendefekt entspricht, auf welchen das entsprechende Vorhersagemodell (13) fokussiert ist.

7. Verfahren (100) nach einem der Ansprüche 1 bis 6, wobei das Auswertemodell (14) die Zusammenhänge von Oberflächendefekten mit dem zugehörigen Entstehungsmechanismus des Oberflächendefekts und den relevanten Regelgrößen beschreibt.

8. Verfahren (100) nach einem der Ansprüche 1 bis 7, wobei das Expertensystem (15) sinnvolle Änderungen für bestimmte Regelgrößen beschreibt, insbesondere Parameterräume für Regelgrößen und/oder Schrittgrößen für Änderungen von Regelgrößen.

9. Verfahren (100) nach einem der Ansprüche 1 bis 8, wobei die angepasste Regelgröße für unterschiedliche Zeitpunkte bestimmt werden kann, beispielsweise zur sofortigen Umsetzung, zur Umsetzung für die nachfolgende Schmelze einer Pfanne, nach einer durchgeführten Wartung oder zu anderen Zeitpunkten.

10. Verfahren (100) nach einem der Ansprüche 1 bis 9, wobei das Auswertemodell (14) und/oder das Expertensystem (15) anfänglich mit Expertenwissen konfiguriert wird.

11. Verfahren (100) nach einem der Ansprüche 1 bis 10, wobei das Auswertemodell (14) und/oder das Expertensystem (15) selbstlernend sind.

12. Verfahren (100) nach einem der Ansprüche 1 bis 11, wobei das Verfahren (100) in Echtzeit ausgeführt wird, insbesondere kontinuierlich.

13. Verfahren (100) nach einem der Ansprüche 1 bis 12, wobei das Expertensystem (15) regelbasiert ist.

## Claims

1. Method (100) for avoiding surface defects in the production of products such as thick slabs, thin slabs or elongate products in a continuous casting plant (1), comprising at least the plant parts of steelworks (2), ladle furnace (3), casting machine (4), rolling mill (5) and surface inspection unit (6), comprising the steps:
- detection (101) of relevant regulating variables in the plant parts of steelworks (2), ladle furnace (3), casting machine (4) and rolling mill (5), wherein the relevant regulating variables comprise at least the composition of the alloy, the temperature in the ladle furnace (3), the casting speeds of the casting machine (4) and parameters in the rolling mill (5);
- assignment (102) of the detected regulating variables to corresponding positions of the produced product;
- detection (103) of surface defects and the position thereof at the produced product by the surface inspection unit (6);
- prediction (104) of probably future surface defects by means of at least one prediction model (13) on the basis of the detected relevant regulating variables, the positions, which are assigned to the regulating variables, at the produced product, and the detected surface defects and position thereof at the produced product, wherein the at least one prediction model (13) is based on artificial intelligence;
**characterised by**
- evaluation (105) of the prediction of the prediction model (13) by means of an evaluation model (14) for determination of a fault cause of the surface defect predicted by the prediction model (13), wherein the evaluation model (14) determines the most probable fault cause for the predicted surface defect and a single most probable regulating variable of the plant parts of steelworks (2), ladle furnace (3), casting machine (4) and rolling mill (5) as principal cause for the predicted surface defect; and
- determination (106) of an adapted regulating variable by means of an expert system (15) for avoidance of the predicted surface defect, wherein the expert system (15) contains information on how changes in a regulating variable have an effect on surface defects and wherein the expert system (15) adapts only the individual regulating variables which were determined by the evaluation model (14) as principal cause for the predicted surface defect,
- communicating the individual determined adapted regulating variable to an automatic processing system of the corresponding plant part for automatic or partly automatic implementation with manual monitoring.

2. Method (100) according to claim 1, wherein the detected relevant regulating variables and/or the determined adapted regulating variables relate to level 2 of the automation plane, preferably additionally to level 1 of the automation plane.

3. Method (100) according to one of claims 1 and 2, wherein the assignment (102) of the detected regulating variables to corresponding positions of the produced product take into consideration the changes in length of the intermediate product or end product which potentially arise in the individual plant parts of steelworks (2), ladle furnace (3), casting plant (4) and rolling mill (5).

4. Method (100) according to any one of claims 1 to 3, wherein the detected or predicted surface defects refer to the end of the production chain, preferably to the intended use at the end take-off unit.

5. Method (100) according to any one of claims 1 to 4, wherein the prediction (104) of surface defects is carried out by means of a plurality of prediction models (13), wherein each prediction model (13) is focused on a specific surface defect.

6. Method (100) according to claim 5, wherein the prediction (104) of a determined surface defect is carried out in such a way that one of the plurality of prediction models (13) is affected, wherein the determined surface defect corresponds with the surface defect on which the corresponding prediction model (13) is focused.

7. Method (100) according to any one of claims 1 to 6, wherein the evaluation model (14) describes the correlations of surface defects with the associated creation mechanism of the surface defect and the relevant regulating variables.

8. Method (100) according to any one of claims 1 to 7, wherein the expert system (15) describes feasible changes for specific regulating variables, in particular parameter spaces for regulating variables and/or step variables for changes in regulating variables.

9. Method (100) according to any one of claims 1 to 8, wherein the adapted regulating variable can be determined for different instants, for example for immediate implementation, for implementation for the succeeding melt of a ladle, after maintenance has been formed or at other instants.

10. Method (100) according to any one of claims 1 to 9, wherein the evaluation model (14) and/or the expert system (15) is or are initially configured with expert knowledge.

11. Method (100) according to any one of claims 1 to 10, wherein the evaluation model (14) and/or the expert system (15) is or are self-learning.

12. Method (100) according to any one of claims 1 to 11, wherein the method (100) is performed in real time, particularly continuously.

13. Method (100) according to any one of claims 1 to 12, wherein the expert system (15) is rule-based.

## Revendications

1. Procédé (100) pour éviter des défauts de surface lors de la fabrication de produits tels que des brames épaisses, des brames minces ou des produits longs dans une installation de coulée continue (1) comprenant au moins les parties de l'installation aciérie (2), four à poche (3), machine de coulée (4), laminoir (5) et inspection de surface (6), comprenant les étapes suivantes :
- la détection (101) de grandeurs de régulation pertinentes dans les parties de l'installation aciérie (2), four à poche (3), machine de coulée (4) et laminoir (5), les grandeurs de régulation pertinentes comprenant au moins la composition de l'alliage, la température dans le four à poche (3), les vitesses de coulée de la machine de coulée (4) et des paramètres dans le laminoir (5) ;
- l'affectation (102) des grandeurs de régulation détectées à des positions correspondantes du produit fabriqué ;
- la détection (103) de défauts de surface et de leur position sur le produit fabriqué par l'inspection de surface (6) ;
- la prédiction (104) de défauts de surface futurs probables au moyen d'au moins un modèle de prédiction (13) sur la base des grandeurs de régulation pertinentes détectées, des positions sur le produit fabriqué affectées aux grandeurs de régulation et des défauts de surface détectés et de leur position sur le produit fabriqué, l'au moins un modèle de prédiction (13) étant basé sur une intelligence artificielle ;
**caractérisé par**
- l'évaluation (105) de la prédiction du modèle de prédiction (13) au moyen d'un modèle d'évaluation (14) pour déterminer une cause de défaut du défaut de surface prédit par le modèle de prédiction (13), le modèle d'évaluation (14) déterminant la cause de défaut la plus probable pour le défaut de surface prédit et une grandeur de régulation unique la plus probable des parties de l'installation aciérie (2), four à poche (3), machine de coulée (4) et laminoir (5) comme cause principale pour le défaut de surface prédit ; et
- la détermination (106) d'une grandeur de régulation adaptée au moyen d'un système expert (15) pour éviter le défaut de surface prédit, le système expert (15) contenant des informations sur la manière dont des modifications d'une grandeur de régulation se répercutent sur les défauts de surface, et le système expert (15) n'adaptant que la grandeur de régulation unique qui a été déterminée par le modèle d'évaluation (14) comme cause principale pour le défaut de surface prédit,
- la transmission de la grandeur de régulation adaptée déterminée unique à une automatisation de processus de la partie de l'installation correspondante en vue d'une mise en œuvre automatique ou semi-automatique avec surveillance manuelle.

2. Procédé (100) selon la revendication 1, dans lequel les grandeurs de régulation pertinentes détectées et/ou la grandeur de régulation adaptée déterminée concernent le level-2 du niveau d'automatisation, de préférence en outre le level-1 du niveau d'automatisation.

3. Procédé (100) selon l'une des revendications 1 à 2, dans lequel l'affectation (102) des grandeurs de régulation détectées à des positions correspondantes du produit fabriqué prend en compte la variation de longueur du produit intermédiaire ou du produit final apparaissant potentiellement dans les différentes parties de l'installation aciérie (2), four à poche (3), machine de coulée (4) et laminoir (5).

4. Procédé (100) selon l'une des revendications 1 à 3, dans lequel les défauts de surface détectés ou prédits se réfèrent à la fin de la chaîne de production, de préférence à l'utilisation prévue chez le client final.

5. Procédé (100) selon l'une des revendications 1 à 4, dans lequel la prédiction (104) de défauts de surface est effectuée au moyen de plusieurs modèles de prédiction (13), chaque modèle de prédiction (13) étant focalisé sur un défaut de surface particulier.

6. Procédé (100) selon la revendication 5, dans lequel la prédiction (104) d'un défaut de surface particulier s'effectue par le fait que l'un des plusieurs modèles de prédiction (13) se déclenche, le défaut de surface particulier correspondant au défaut de surface sur lequel le modèle de prédiction (13) correspondant est focalisé.

7. Procédé (100) selon l'une des revendications 1 à 6, dans lequel le modèle d'évaluation (14) décrit les corrélations des défauts de surface avec le mécanisme de formation associé du défaut de surface et les grandeurs de régulation pertinentes.

8. Procédé (100) selon l'une des revendications 1 à 7, dans lequel le système expert (15) décrit des modifications appropriées pour des grandeurs de régulation particulières, notamment des espaces paramétriques pour des grandeurs de régulation et/ou des tailles de pas pour des modifications de grandeurs de régulation.

9. Procédé (100) selon l'une des revendications 1 à 8, dans lequel la grandeur de régulation adaptée peut être déterminée pour différents instants, par exemple pour une mise en œuvre immédiate, pour une mise en œuvre pour la coulée suivante d'une poche, après une maintenance effectuée ou à d'autres instants.

10. Procédé (100) selon l'une des revendications 1 à 9, dans lequel le modèle d'évaluation (14) et/ou le système expert (15) sont initialement configurés avec des connaissances d'expert.

11. Procédé (100) selon l'une des revendications 1 à 10, dans lequel le modèle d'évaluation (14) et/ou le système expert (15) sont auto-apprenants.

12. Procédé (100) selon l'une des revendications 1 à 11, dans lequel le procédé (100) est exécuté en temps réel, notamment en continu.

13. Procédé (100) selon l'une des revendications 1 à 12, dans lequel le système expert (15) est basé sur des règles.
